# EUROPEAN PATENT SPECIFICATION

(11) **EP 2 765 071 B1**
(45) Date of publication and mention of the grant of the patent: **01.04.2020**
(21) Application number: 13154442.1
(22) Date of filing: 07.02.2013
(51) Int. Cl.: B62K 11/10, F16H 57/027, F16H 57/04

(54) **Straddle-type vehicle with air-cooled transmission**
Grätschsitzfahrzeug mit luftgekühltem Getriebe
Véhicule de type à califourchon avec transmission à refroidissement par air

(43) Date of publication of application: 13.08.2014
(73) Proprietor: YAMAHA MOTOR CO., LTD., Iwata-shi Shizuoka 438-8501 (JP)
(72) Inventor: Alessandro, Saita, Iwata, Shizuoka 438-8501 (JP)
(74) Representative: Grünecker Patent- und Rechtsanwälte PartG mbB

(56) References cited:
- EP-A1- 1 619 112
- EP-A1- 2 287 031
- FR-A1- 2 748 702

## Description

The present invention relates to a straddle-type vehicle according to the preamble of independent claim 1. Such a straddle-type vehicle can be taken from the prior art document EP 2 221 243 A1.

Prior art document FR 2 748 702 A1 refers to a scooter-type vehicle provided with a power unit for driving a rear wheel. Said power unit comprises an engine and a gear box. Moreover, the scooter-type vehicle comprises a frame having a down tube and left and right main frames which are connected by cross members. The known scooter-type vehicle comprises left and right side panels which are arranged under the seat. Said side panel is provided with openings, wherein auxiliary footrests are extending therethrough. Moreover, said prior art document suggests an air-intake duct that is connected to an air cleaner, wherein said air cleaner is supported by the upper face of a housing of a gear box. Said air-intake duct comprises an inlet air chamber fixed to an inner face of the side panel, wherein an inlet opening thereof faces the opening of the side panel. Moreover, said air cleaner is connected with the carburettor and an air intake pipe of the engine.

Specific straddle-type vehicles are provided with a transmission that should be cooled by airflow. As for example, said transmission would be a V-belt transmission disposed between an engine and the rear wheel of the vehicle. In order to cool such a V-belt transmission, external air is supplied into a transmission case so that airflow cools the elements of the transmission.

As for example, prior art document EP 0 953 501 A2 teaches such a scooter-type vehicle with a swinging-type drive unit having an engine and a transmission, wherein said transmission is embodied as a V-belt continuously variable transmission. An air-intake duct is arranged under the foot board of an assist seat and extends in the horizontal direction. Said air-intake duct is tube-shaped and rooted from the transmission case towards a middle section of the vehicle in front of the main seat. In said middle section of the vehicle, the tube-shaped air duct is bent into an upright configuration so that entrance of water, mud and gravel from the road can be prevented. However, such arrangement requires a relatively long air-intake duct being arranged as an individual element within the straddle-type vehicle.

An alternative solution for arrangement of such air duct is suggested by the prior art document EP 2 221 243 A1. Accordingly, such an air-intake duct directly extends from an upper section of the transmission case in an upward and rearward direction of the vehicle so that the end opening of the air duct would be arranged directly under the assist seat. With such an arrangement, the opening of the air-intake duct would also be placed away from the road but within the area of the rear wheel so that further protection means may be necessary in order to prevent entry of water, mud or gravel from the road.

A further prior art document EP 1 619 112 A1 refers to an arrangement of an air cleaner for scooters, wherein the air inlet of the air cleaner is arranged at one side of the frame and the air outlet of the air cleaner is mounted at the other side of the frame, so that the air cleaner case bridges the frame section in consideration of the width direction of the vehicle.

A further prior art document EP 2 287 031 A1 relates to a power unit for a two-wheel motor vehicle and indicates to provide an air cooled transmission as part of the drive unit.

It is an object of the present invention to provide a straddle-type vehicle wherein high cooling performance of the respective transmission can be ensured and entrance of water and mud can be prevented.

According to the present invention said object is solved by a Straddle-type vehicle having the features of independent claim 1. Preferred embodiments are laid down in the dependent claims.

Hereinafter, the present invention is illustrated and explained by means of a preferred embodiment, in conjunction with the accompanying drawings. In the drawings wherein:
- Fig. 1a: is a side view of the straddle-type vehicle according to an embodiment,
- Fig. 1b: is a side view of the straddle-type vehicle, wherein the body frame, the engine and the swinging-type drive unit is illustrated,
- Fig. 2a: is a side view of the swinging type drive unit side cover and the air-intake duct,
- Fig. 2b: is a perspective view from above directed to the air-intake duct and the adjacent elements,
- Fig. 3a: is a cross-sectional view of the air-intake duct element,
- Fig. 3b: is a side view of the air-intake duct element, and
- Fig. 3c: is a sectional view of the upper part of the air-intake duct,

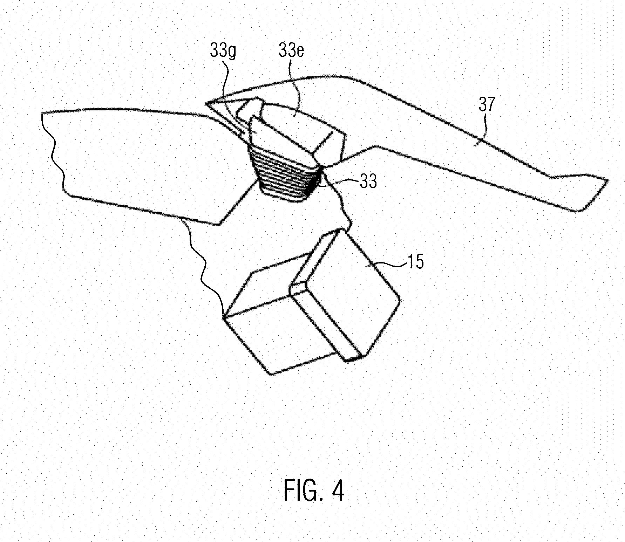

- Fig. 4: is a perspective view from inside to outside of the vehicle directed to the air-intake duct,

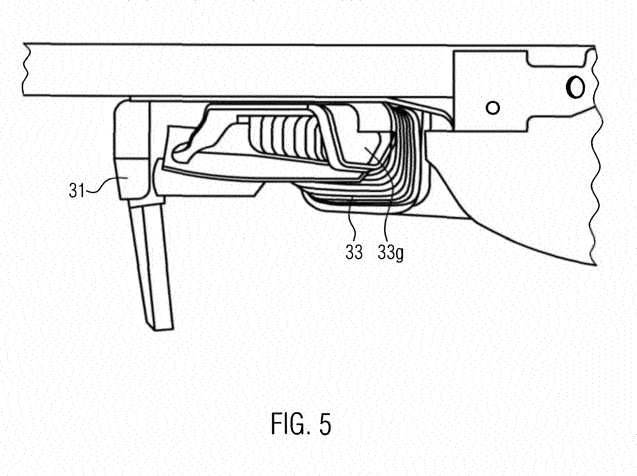

- Fig. 5: is a plan view directed to the air-intake duct,
- Fig. 6a: is a side view of the transmission case,
- Fig. 6b: is a plan view of the transmission case,
- Fig. 7: is a sectional of the swinging-type unit illustrating the engine and the transmission.

For the straddle-type vehicle according to the embodiment, terms like "upper", "lower", "upward direction", "downward direction", "forward direction", "rearward direction", "left", "right", "front", "rear", "horizontally" and "vertically" are commonly defined with regard to the normal driving direction of the vehicle.

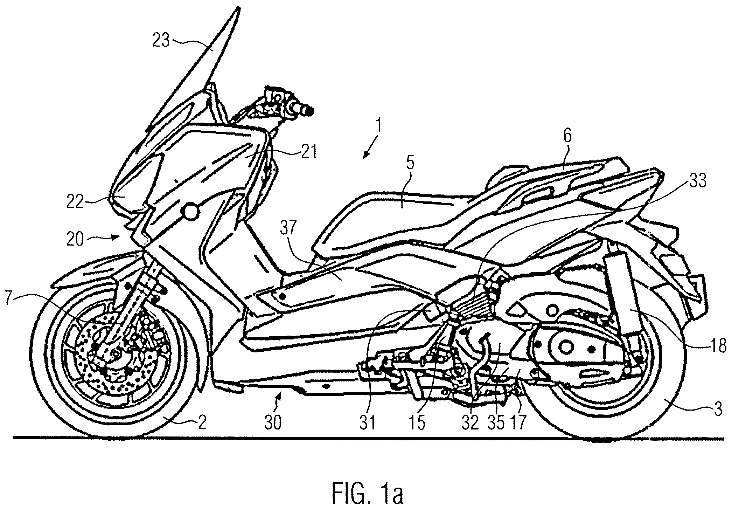

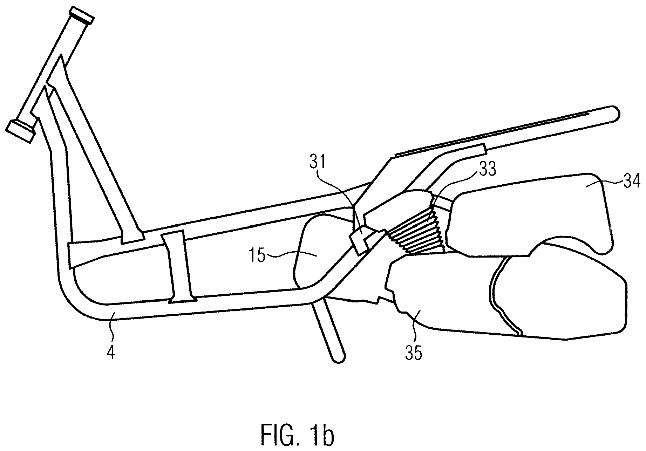

The straddle-type vehicle 1 as illustrated within Figures 1a and 1b is embodied as a scooter-type vehicle having a front wheel 2, a rear wheel 3, as well as a body frame 4. A main seat 5 for a driver is arranged between the front wheel 2 and the rear wheel 3. An assist seat 6 for a co-rider is arranged directly above the rear wheel 3 and behind the main seat 5. A main footboard 30 is arranged on a bottom part of the vehicle. Said main footboard 30 comprises a left side footboard section and a right side footboard section being provided for the left and right feet of the rider. An assist footboard 31 is provided for the feet of the co-rider sitting on the assist seat 6. Said assist footboard 31 comprises a left side footboard section and a right side footboard section for the left and right feet of the co-rider. The respective assist footboard is attached to a frame section of the body frame 4 of the vehicle.

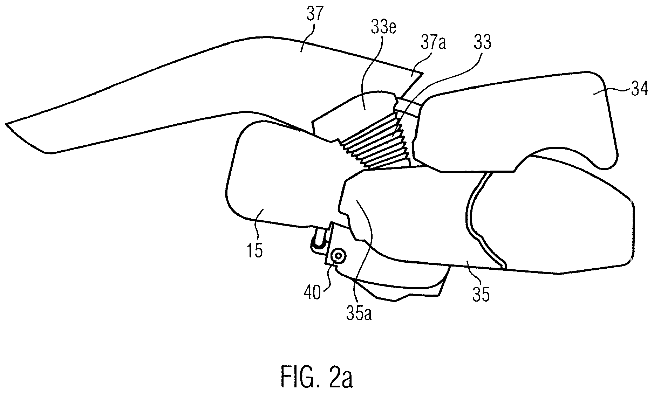

The rear wheel 3 is supported on the body frame 4 with a suspension means 18, and a swinging-type drive unit 17 is rotatable (swingable) around a pivot support bearing 40 (Fig. 2a) of the body frame 4. Said swinging-type drive unit 17 comprises an engine 15 and a transmission 32, as illustrated by Figures 1a and 1b.

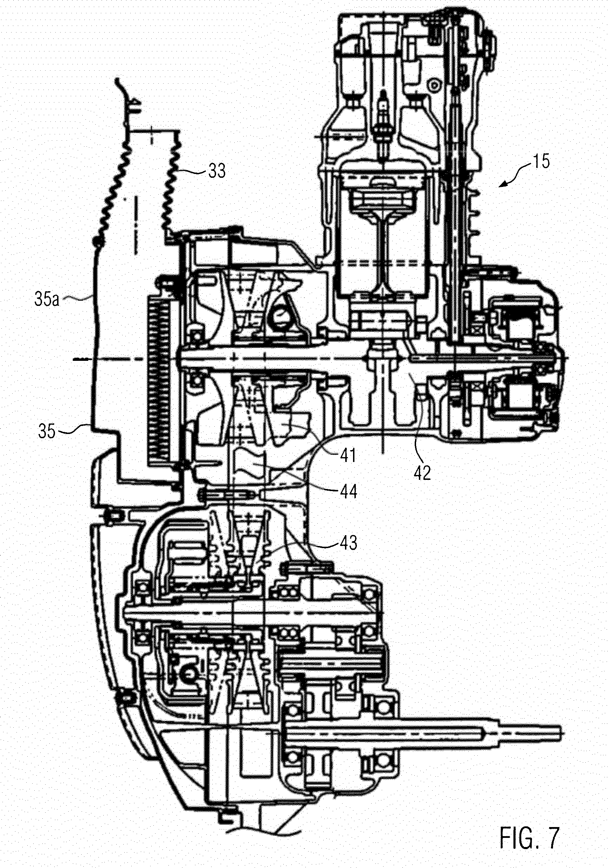

According to the embodiment illustrated in Figure 7, the transmission 32 is a continuously variable V-belt transmission (CVT) having a driven pulley 41 that is driven by a crankshaft 42 of the engine 15 and a drive pulley 43 that drives the rear wheel 3 of the vehicle, wherein a transmission means is arranged between the drive pulley 43 and the driven pulley 41. A V-belt 44 is arranged for transmitting rotation from the driven pulley 41 to the drive pulley 43.

The driven pulley, the drive pulley and the V-belt are arranged within a transmission casing having a transmission case 35, wherein airflow is introduced into said transmission case 35 for cooling the respective elements. For introducing such airflow, an air-intake duct 33 is connected to said transmission 32. As illustrated in Figures 1a and 1b, said air-intake duct 33 is arranged between the assist footboard 31 of the respective side of the vehicle and the assist seat 6. According to the present embodiment, the air-intake duct 33 is arranged on the left side of the vehicle and connected with a forward section 35a of the transmission case 35. In particular, the air-intake duct 33 is attached to the transmission case 35 at an opposite side with regard to the attachment or supporting side of the rear wheel 3 on the respective transmission.

As can be taken further from Figure 1a and 1b, the respective assist footboard 31 is arranged in the forward direction with regard to the transmission 32 in consideration of the respective side view of the vehicle. According to the preferred embodiment, the assist footboard 31 is arranged under the main seat 5 and in the forward direction with regard to the assist seat 6. Said assist footboard 31 is arranged on a higher level than the main footboard 30 with regard to the road on which the vehicle drives.

A side cover 37 is arranged under the main seat 5 and between the assist footboard 31 and said main seat 5 as illustrated in Figure 1. Said side cover 37 covers an upper part of the engine 15 in respective side view. Said side cover 37 constitutes part of the cover means 20 of the vehicle that is arranged to cover several elements like a fuel tank, the front fork 7 and the head pipe 8 of the vehicle.

The preferred embodiment is equipped with an engine of the water-cooled type so that a radiator is provided for cooling the engine. Such a radiator is arranged in front of the fuel tank and exposed in a forward direction to the wind when the vehicle drives in the forward direction. Moreover, between said assist seat 6 and the transmission 32, an air cleaner 34 is provided. Said air cleaner 34 provides air to the engine 15.

As further illustrated by Figure 1a, the front wheel 2 is supported by the front fork 7 wherein said front fork 7 is rotatably supported within the head pipe 8 of the body frame 4. A handle is attached to said front fork 7 in order to rotate the same within the head pipe 8. According to the preferred embodiment, the head pipe 8 and the upper part of the front fork are covered by a respective cover body 21. In particular, said cover body comprises a headlight section 22 and a windshield 23, and also supports an instrument panel.

According to Figure 2a, the air-intake duct 33 is arranged to be connected to the side cover 37 and the transmission case 35. In particular, said side cover 37 comprises a rearward section 37a which extends outside of the respective frame section and covers at least part of the engine 15. The transmission case 35 of the transmission 32 comprises a forward section 35a that is connected with the air-intake duct 33. In particular, said forward section 35a of the transmission case 35 is provided with an intake opening 35b that is open to the inside of the transmission case 35. Said intake opening 35b of the transmission 32 faces to the upward direction. Accordingly, airflow through the air-intake duct 33 flows in the downward direction through said intake opening 35b of the transmission case 35 into said transmission case 35 for cooling the respective elements (pulleys and belt) accommodated therein.

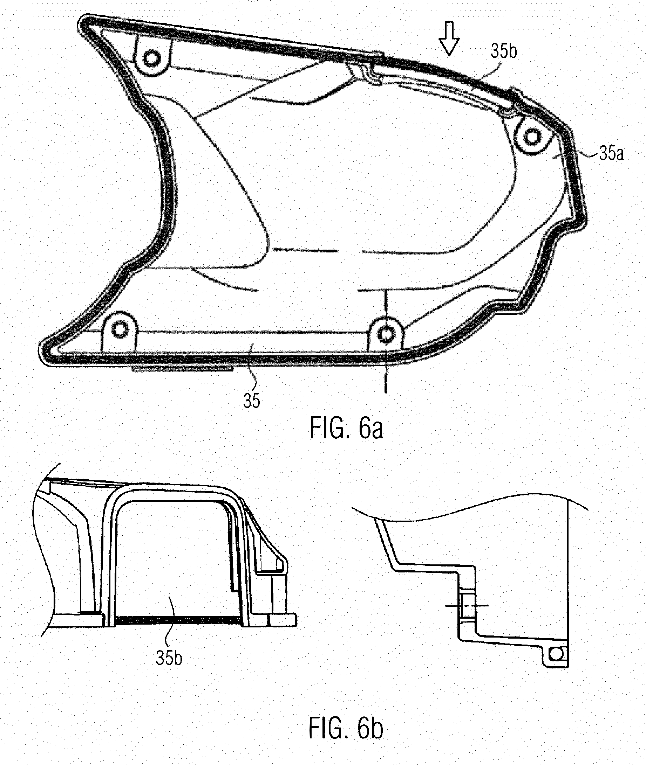

Fig. 6a illustrates the transmission case 35 with a view of the inside of the vehicle. The intake opening 35b is provided with a groove section.

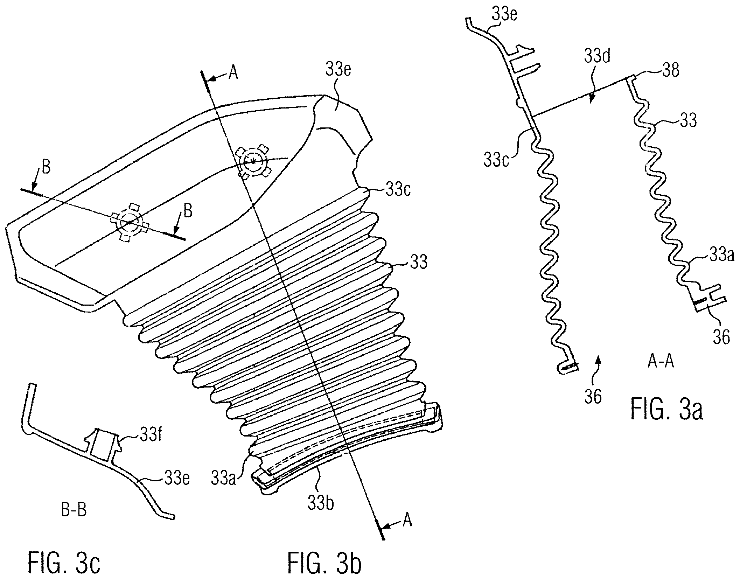

The air-intake duct 33 has a downward section 33a with a downward opening 33b that is connected with said intake opening 35b of the transmission case 35. The downward opening 33b of the air-intake duct 33 coincides with the intake opening 35b of the transmission case 35 wherein a sealing 36 is arranged in order to provide an air-tight sealing between the transmission case 35 and the air-intake duct 33 as illustrated by Figure 3a and 3b.

As further illustrated by Figures 3a and 3b, the air-intake duct 33 comprises an upward section 33c that is attached to the side cover 37. In particular, said upward section 33c of the air-intake duct 33 is provided with an upward opening 33d that is connected to a rearward opening 37b of the side cover 37 as illustrated by Figure 3a. A sealing 38 is arranged between said upward opening 33d of the air-intake duct 33 and said rearward opening 37b of the side cover 37. Said sealing provides an air-tight sealing between the side cover 37 and the air-intake duct 33.

The upward section 33c of the air-intake duct 33 is provided with an upper side extension 33e. Said upper side extension 33e extends on the outer side of the air-intake duct 33 and overlaps with the rearward section 37a of the side cover 37 as illustrated in Fig. 2a. An inner wall of said upper side extension 33e is provided with elastic hook means which are inserted into openings provided on the rearward section 37a of the side cover 37. Such overlapping of the upper side extension 33e of the air-intake duct with the rearward section 37a of the side cover 37 ensures sufficient connection of the respective elements. Said connection is maintained even if load is applied thereto in case of movement of the swinging-type drive unit 17. On the inner side of the vehicle opposing to the upper side extension 33e, an attachment element 33g is provided. The upper side extension 33e and the attachment element 33g constitutes some air guiding means for guiding air from the side cover 37 to the air-intake duct 33.

According to the preferred embodiment, the sealing 36 and 38 are integrated in the downward section 33a and the upward section 33c of the air-intake duct 33 respectively. In particular, a sealing groove is arranged on the respective section of the air-intake duct 33 so that a respective edge of the rearward opening 37b of the side cover 37 and an edge of the intake opening 35b of the transmission case 35 would be inserted into the respective groove when the air intake duct 33 is attached to the side cover 37 and the transmission case 35. In view of elastic properties of the air-intake duct, said grooves are made slightly smaller than the respective width of the related edge section, and pressing force caused by elastic deformation of the groove section would ensure air-tight sealing. With such configuration, the downward opening 33b of the air-intake duct 33 directly faces into the inside of the transmission case 35, and the upward opening 33d of the air-intake duct 33 directly faces into the inside of the side cover 37.

As evident from Figs. and 3b as well as Figs. 6a and 6b, the sealing 36, that is provided on the downward section 33a, is adapted to be received into the groove section provided around the intake opening 35b of the transmission case 35 and the reinforced metal element prevents disengagement of the air-intake duct 33 and the transmission case 35.

According to the preferred embodiment, the side cover 37 is constituted as a hollow tube-shaped element so that airflow is routed through the same towards the air-intake duct 33 in order to supply airflow to the inside of the transmission case 35.

Said side cover 37 is affixed to the body frame 4. The swinging-type drive unit 17 is moveable with regard to said body frame 4 so that the transmission case 35 moves relative to the side cover 37 due to the swinging motion of the drive unit 17. Hence, the air-intake duct 33 is provided with elastic properties in order to compensate for such movement wherein air-tight connection between the inside of the side cover 37 and the inside of the transmission case 35 is ensured by the sealings 36 and 38. In order to provide such elastic properties, the air-intake duct 33 is provided with a bellows shaped section.

According to the preferred embodiment, the air-intake duct 33 has a substantial rectangular cross-section with the large side extending in the front and aft direction and the short side extending in the width direction of the vehicle. A cross-sectional size at the upward opening 33d of the intake duct 33 is greater than a cross-sectional size of the downward opening 33b of the air-intake duct 33. Between said openings, the cross-sectional size changes continuously so that acceleration of airflow towards the transmission case is provided.

As illustrated within Figs. 3a and 3b, the downward section 33a of the air-intake duct 33 is provided with the sealing 36, wherein said sealing is reinforced by means of a metal insert.

According to an alternative embodiment, the air-intake duct 33 is attached to the transmission and/or to the side cover such that the respective openings would be arranged side by side and an outer surface of the air-intake duct is affixed to an outer surface of the transmission case 35 and/or the side cover 37. Such arrangement and respective sealing is embodied by pasting, gluing, or by means of an additional clamping bracket. Accordingly, the respective sealing would be embodied by such pasting material or by means of pressing force caused by the clamping bracket. Alternatively, the respective sealing is embodied by a separate sealing element.

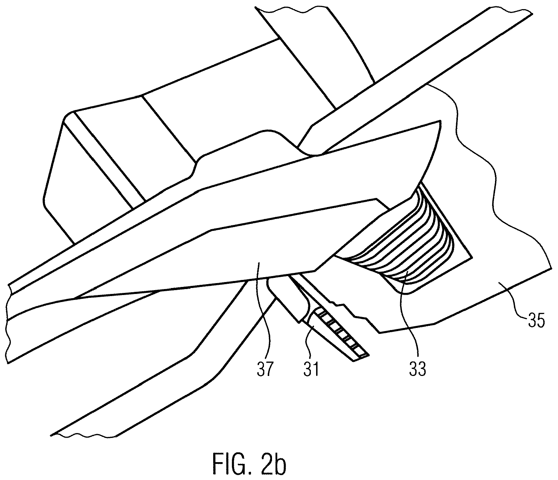

The air-intake duct 33 is arranged outside of the body frame with regard to the width direction of the vehicle. Moreover, the rear section 37a of the side cover 37 is also arranged outside of the body frame 4 as clearly illustrated by Figure 1b. As shown in detail by Figure 2b and also illustrated by Figure 1a, the air-intake duct 33 is arranged between the assist footboard 31 and the assist seat 6. In further detail, the air-intake duct 33 is arranged between the assist footboard 31 and the air cleaner 34.

The embodiment illustrates the air-intake duct 33 made as a one-piece element of rubber or resin material. Such one-piece element is made by injection moulding. Caused by motion of the drive unit 17 with regard to the body frame, elastic properties are required for the air-intake duct only in consideration of said moving direction. In particular, the air-intake duct is arranged above the pivot support bearing 40 of the drive unit 17 as illustrated in Fig. 2a. Hence, said air-intake duct is able to follow the motion along an arc through said duct with said pivot 40 as a centre. Accordingly, the reinforcing structure embodied by the specific shape of the duct or by inserting elements can be provided in any further direction. In particular, such reinforcing structure restricts deformation caused by a side impact.

The illustrated embodiment discloses a straddle-type vehicle with a body frame 4 supporting a main seat 5 and an assist seat 6 arranged on a rear side of the main seat 5. A main footboard 30 and an assist footboard 31 are supported on the left and right sides of said body frame 4 respectively. A swinging-type drive unit 17 having an engine 15 and a transmission 32 is arranged under said main and assist seat 5,6. An air-intake duct 33 is connected to said transmission 32. Said air-intake duct 33 is arranged on one of said left or right sides outside of the body frame 4 with regard to the width direction of the vehicle at least in an area between the assist footboard 31 and the assist seat 6. An air cleaner 34 is arranged above said transmission 32. Said air-intake duct 33 extends between said assist footboard 31 and said air cleaner 34 with regard to a side view of the vehicle.

Said transmission 32 comprises a transmission case 35 and a downward section 33a of said air-intake duct 33 is connected to a forward section 35a of the transmission case 35. Said forward section 35a of the transmission case 35 has an intake opening 35b to the inside thereof. Said intake opening 35b opens in an upward direction of the vehicle. The downward section 33a of the air-intake duct 33 has a downward opening 33b connected with said intake opening 35b of the of the transmission case 35. A sealing 36 is provided between the intake opening 35b of the transmission case 35 and the downward opening 33b of the air-intake duct 33.

A side cover 37 is arranged at least at said one side between the main seat 5 and the main footboard 30. The air-intake duct 33 is connected to said side cover 37. Said side cover 37 has a hollow tube configuration connected with the air-intake duct 33.

A rearward section 37a of said side cover 37 is connected with an upward section 33c of the air-intake duct 33. Said rearward section 37a of the side cover 37 is arranged outside of the body frame 4 with regard to the width direction of the vehicle.

Said rearward section 37a of said side cover 37 has a rearward opening 37b to the inside thereof. Said rearward opening 37b opens in a downward direction of the vehicle. The upward section 33c of the air-intake duct 33 has an upward opening 33d connected with said rearward opening 37b of the side cover 37. A cross-sectional size of the upward opening 33d of the air-intake duct 33 is greater than a cross-sectional size of the downward opening 33b of the air-intake duct 33.

A sealing 38 is provided between said upward opening 33d of the air-intake duct 33 and said rearward opening 37b of the side cover 37.

Said side cover 37 is fixed at the body frame 4 and said air-intake duct 33 is provided with a bellows section 33e.

Said body frame 4 comprises a frame section at least on said one side extending from the main footboard 30 in a rearward and upward direction. Said assist footboard 31 is attached to said frame section and said rear section of the side cover 37 covers at least a part of said frame section.

## Claims

1. Straddle-type vehicle comprising:
a body frame (4) supporting a main seat (5) and an assist seat (6) arranged on a rear side of the main seat (5),
a side cover (37);
a main footboard (30) and an assist footboard (31) supported on the left and right sides of said body frame (4) respectively,
the side cover (37) is arranged between the main seat (5) and the main footboard (30),
a swinging-type drive unit (17) having an engine (15) and a transmission (32) arranged under said main and assist seat (5,6), an air cleaner (34), and an air-intake duct (33) connected to said transmission (32) having a transmission case (35), wherein said air-intake duct (33) comprises an upward section (33c) provided with an upward opening (33d) and is arranged on one of said left or right sides outside of the body frame (4) with regard to the width direction of the vehicle at least in an area between the assist footboard (31) and the assist seat (6), a downward opening (33b) of said air-intake duct (33) connected with an intake opening (35b) of the transmission case (35) to the inside thereof,
**characterized in that**
the air cleaner (34) is arranged above said transmission (32) wherein said air-intake duct (33) extends between said assist footboard (31) and said air cleaner (34) with regard to a side view of the vehicle, and the upward section (33c) of the air-intake duct (33) is attached to the side cover (37) that is arranged to said one of said left or right sides outside of the body frame (4) at which said air-intake duct (33) is arranged.

2. Straddle-type vehicle according to claim 1, **characterized in that** a downward section (33a) of said air-intake duct (33) is connected to a forward section (35a) of the transmission case (35).

3. Straddle-type vehicle according to 2, **characterized in that** said forward section (35a) of the transmission case (35) has the intake opening (35b) to the inside thereof, said intake opening (35b) opens in an upward direction of the vehicle, and the downward section (33a) of the air-intake duct (33) has the downward opening (33b) connected with said intake opening (35b) of the of the transmission case (35).

4. Straddle-type vehicle according to claim 3, **characterized by** a sealing (36) between the intake opening (35b) of the transmission case (35) and the downward opening (33b) of the air-intake duct (33).

5. Straddle-type vehicle according to at least one of the claims 1 to 4, **characterized in that** said side cover (37) has a hollow tube configuration connected with the air-intake duct (33).

6. Straddle-type vehicle according to claim 5, **characterized in that** a rearward section (37a) of said side cover (37) is connected with an upward section (33c) of the air-intake duct (33).

7. Straddle-type vehicle according to claim 6, **characterized in that** said rearward section (37a) of the side cover (37) is arranged outside of the body frame (4) with regard to the width direction of the vehicle.

8. Straddle-type vehicle according to claim 6 or 7, **characterized in that** said rearward section (37a) of said side cover (37) has a rearward opening (37b) as the opening to the inside thereof, said rearward opening (37b) opens in a downward direction of the vehicle, and the upward section (33c) of the air-intake duct (33) has the upward opening (33d) connected with said rearward opening (37b) of the side cover (37).

9. Straddle-type vehicle according to claim 8, **characterized in that** a cross-sectional size of the upward opening (33d) of the air-intake duct (33) is greater than a cross-sectional size of the downward opening (33b) of the air-intake duct (33).

10. Straddle-type vehicle according to claim 8 or 9, **characterized by** a sealing (38) between said upward opening (33d) of the air-intake duct (33) and said rearward opening (37b) of the side cover (37).

11. Straddle-type vehicle according to at least one of the claims 1 to 10, **characterized in that** said side cover (37) is fixed at the body frame (4) and said air-intake duct (33) is provided with a bellows section (33e).

12. Straddle-type vehicle according to at least one of the claims 1 to 11, **characterized in that** said body frame (4) comprises a frame section at least on said one side extending from the main footboard (30) in a rearward and upward direction, wherein said assist footboard (31) is attached to said frame section and said rear section of the side cover (37) covers at least a part of said frame section.

## Patentansprüche

1. Ein Spreiz-Sitz-Typ-Fahrzeug, das umfasst:
einen Körper-Rahmen (4), der einen Haupt-Sitz (5) und einen Zusatz-Sitz (6),
angeordnet an einer Rück-Seite von dem Haupt-Sitz (5), lagert,
eine Seiten-Abdeckung (37);
ein Haupt-Fußbrett (30) und ein Zusatz-Fußbrett (31), jeweils gelagert an der linken und rechten Seite von diesem Körper-Rahmen (4),
die Seiten-Abdeckung (37) ist zwischen dem Haupt-Sitz (5) und dem Haupt-Fußbrett (30) angeordnet, eine Schwing-Typ-Antriebs-Einheit (17) hat einen Motor (15) und ein Getriebe (32), angeordnet unter diesem Haupt- und Zusatz-Sitz (5, 6), einen Luft-Filter (34), und einen Luft-Einlass-Kanal (33), der mit diesem Getriebe (32), das ein Getriebe-Gehäuse (35) hat, verbunden ist, wobei dieser Luft-Einlass-Kanal (33) einen nach oben gerichteten Abschnitt (33c), vorgesehen mit einer nach oben gerichteten Öffnung (33d), und an einer von dieser linken und rechten Seite, außerhalb von dem Körper-Rahmen (4) mit Bezug auf die Breiten-Richtung von dem Fahrzeug,
angeordnet ist, zumindest in einem Bereich zwischen dem Zusatz-Fußbrett (31) und dem Zusatz-Sitz (6), eine nach unten gerichtete Öffnung (33b) von diesem Luft-Einlass-Kanal (33), verbunden mit einer Einlass-Öffnung (35b) von dem Getriebe-Gehäuse (35) zu der Seite desselben, umfasst
**dadurch gekennzeichnet, dass**
der Luft-Filter (34) oberhalb dieses Getriebes (32) angeordnet ist, wobei dieser Luft-Einlass-Kanal (33) sich zwischen diesem Zusatz-Fußbrett (31) und diesem Luft-Filter (34) erstreckt, mit Bezug auf eine Seiten-Ansicht von dem Fahrzeug, und der nach oben gerichtete Abschnitt (33c) von dem Luft-Einlass-Kanal (33) ist an der Seiten-Abdeckung (37) angebracht, die an dieser einen von diesen linken und rechten Seiten, außerhalb von dem Körper-Rahmen (4), angeordnet ist, an der dieser Luft-Einlass-Kanal (33) angeordnet ist.

2. Spreiz-Sitz-Typ-Fahrzeug gemäß Anspruch 1, **dadurch gekennzeichnet, dass** ein nach unten gerichteter Abschnitt (33a) von diesem Luft-Einlass-Kanal (33) mit einem vorwärts gerichteten Abschnitt (35a) von dem Getriebe-Gehäuse (35) verbunden ist.

3. Spreiz-Sitz-Typ-Fahrzeug gemäß Anspruch 2, **dadurch gekennzeichnet, dass** dieser vorwärts gerichtete Abschnitt (35a) von dem Getriebe-Gehäuse (35) eine Einlass-Öffnung (35b) an der Seite desselben hat, diese Einlass-Öffnung (35b) öffnet in einer nach oben gerichteten Richtung von dem Fahrzeug, und der nach unten gerichtete Abschnitt (33a) von dem Luft-Einlass-Kanal (33) hat eine nach unten gerichtete Öffnung (33b), die mit dieser Einlass-Öffnung (35b) von dem Getriebe-Gehäuse (35) verbunden ist.

4. Spreiz-Sitz-Typ-Fahrzeug gemäß Anspruch 3, **gekennzeichnet durch** eine Dichtung (36) zwischen der Einlass-Öffnung (35b) von dem Getriebe-Gehäuse (35) und der nach unten gerichteten Öffnung (35b) von dem Luft-Einlass-Kanal (33).

5. Spreiz-Sitz-Typ-Fahrzeug gemäß zumindest einem der Ansprüche 1 bis 4, **dadurch gekennzeichnet, dass** diese Seiten-Abdeckung (37) eine hohle Röhre hat, die konfiguriert ist, um mit dem Luft-Einlass-Kanal (33) verbunden zu sein.

6. Spreiz-Sitz-Typ-Fahrzeug gemäß Anspruch 5, **dadurch gekennzeichnet, dass** ein rückwärts gerichteter Abschnitt (37a) von dieser Seiten-Abdeckung (37) mit einem nach oben gerichteten Abschnitt (33c) von dem Luft-Einlass-Kanal (33) verbunden ist.

7. Spreiz-Sitz-Typ-Fahrzeug gemäß zu Anspruch 6, **dadurch gekennzeichnet, dass** dieser nach hinten gerichtete Abschnitt (37a) von der Seiten-Abdeckung (37) außerhalb von dem Körper-Rahmen (4) angeordnet ist, mit Bezug auf die Breiten-Richtung von dem Fahrzeug.

8. Spreiz-Sitz-Typ-Fahrzeug gemäß zu Anspruch 6 oder 7, **dadurch gekennzeichnet, dass** dieser nach hinten gerichtete Abschnitt (37a) von dieser Seiten-Abdeckung (37) eine rückwärtige Öffnung (37b) hat, als die Öffnung zu der Innenseite derselben, diese rückwärtige Öffnung (37b) öffnet in eine nach unten gerichtete Richtung von dem Fahrzeug, und der nach oben gerichtete Abschnitt (33c) von dem Luft-Einlass-Kanal (33) hat die nach oben gerichtete Öffnung (33d) verbunden mit dieser nach hinten gerichteten Öffnung (37b) von der Seiten-Abdeckung (37).

9. Spreiz-Sitz-Typ-Fahrzeug gemäß zu Anspruch 8, **dadurch gekennzeichnet, dass** eine Querschnitts-Größe von der nach oben gerichteten Öffnung (33d) von dem Luft-Einlass-Kanal (33) größer ist als eine Querschnitts-Größe von der nach unten gerichteten Öffnung (33b) von dem Luft-Einlass-Kanal (33).

10. Spreiz-Sitz-Typ-Fahrzeug gemäß zu Anspruch 8 oder 9, **gekennzeichnet durch** eine Dichtung (38) zwischen dieser nach oben gerichteten Öffnung (33d) von dem Luft-Einlass-Kanal (33) und dieser nach hinten gerichteten Öffnung (37b) von der Seiten-Abdeckung (37).

11. Spreiz-Sitz-Typ-Fahrzeug gemäß zu irgendeinem der Ansprüche 1 bis 10, **dadurch gekennzeichnet, dass** diese Seiten-Abdeckung (37) an dem Körper-Rahmen (4) fixiert ist und dieser Luft-Einlass-Kanal (33) ist mit einem Balg-Abschnitt (33e) vorgesehen.

12. Spreiz-Sitz-Typ-Fahrzeug gemäß zu irgendeinem der Ansprüche 1 bis 11, **dadurch gekennzeichnet, dass** dieser Körper-Rahmen (4) einen Rahmen-Abschnitt zumindest an dieser einen Seite von dem Haupt-Fußbrett (30) in einer rückwärtigen und nach oben gerichteten Richtung umfasst, wobei dieses Zusatz-Fußbrett (31) an diesem Rahmen-Abschnitt angebracht ist und dieser hintere Abschnitt von der Seiten-Abdeckung (37) zumindest einen Teil von diesem Rahmen-Abschnitt abdeckt.

## Revendications

1. Véhicule de type à selle comprenant :
une cadre (4) supportant un siège principal (5) et un siège auxiliaire (6) agencé sur le flanc arrière du siège principal (5),
un carter latéral (37),
un repose pied principal (30) et un repose pied auxiliaire (31) supportés respectivement sur les flancs gauche et droit dudit cadre (4),
le carter latéral (37) est disposé entre le siège principal (5) et le repose pied principal (30),
une unité d'entraînement (17) de type oscillante comportant un moteur (15) et une transmission (32) disposés sous lesdits sièges principal et auxiliaire (5, 6), un filtre à air (34) et une conduite d'admission d'air (33) raccordés à ladite transmission (32) comportant un carter de transmission (35), ladite conduite d'admission d'air (33) comprenant une section orientée vers le haut (33c) munie d'une ouverture vers le haut (33d) et étant disposée sur l'un desdits flancs gauche ou droit à l'extérieur du cadre (4) par rapport à la direction de la largeur du véhicule au moins dans une zone située entre le repose pied auxiliaire (31) et le siège auxiliaire (6), une ouverture orientée vers le bas (33b) de ladite conduite d'admission d'air (33) étant raccordée à une ouverture d'admission (35b) du carter de transmission (35) vers l'intérieur de celle-ci,
**caractérisé en ce que**
le filtre à air (34) est agencé au-dessus de ladite transmission (32), ladite conduite d'admission d'air (33) s'étendant entre ledit repose pied auxiliaire (31) et ledit filtre à air (34) selon une vue latérale du véhicule, et la section orientée vers le haut (33c) de la conduite d'admission d'air (33) étant fixée au carter latéral (37) qui est disposé sur ledit premier desdits flancs gauche ou droit à l'extérieur du cadre (4) au niveau duquel est agencée ladite conduite d'admission d'air (33).

2. Véhicule de type à selle selon la revendication 1, **caractérisé en ce qu'une** section orientée vers le bas (33a) de ladite conduite d'admission d'air (33) est raccordée à une section vers l'avant (35a) du carter de transmission (35) .

3. Véhicule de type à selle selon la revendication 2, **caractérisé en ce que** ladite section vers l'avant (35a) du carter de transmission (35) comporte une ouverture d'admission (35b) orientée vers l'intérieur de celle-ci, ladite ouverture d'admission (35b) s'ouvrant dans la direction vers le haut du véhicule, et la section orientée vers le bas (33a) de la conduite d'admission d'air (33) comporte une ouverture vers le bas (33b) raccordée à ladite ouverture d'admission (35b) du carter de transmission (35).

4. Véhicule de type à selle selon la revendication 3, **caractérisé par** un joint (36) entre l'ouverture d'admission (35b) du carter de transmission (35) et l'ouverture vers le bas (33b) de la conduite d'admission d'air (33).

5. Véhicule de type à selle selon au moins l'une des revendications 1 à 4, **caractérisé en ce que** ledit carter latéral (37) présente une configuration de tube creux reliée à la conduite d'admission d'air (33).

6. Véhicule de type à selle selon la revendication 5, **caractérisé en ce qu'une** section orientée vers l'arrière (37a) dudit carter latéral (37) est raccordée à une section orientée vers le haut (33c) de la conduite d'admission d'air (33) .

7. Véhicule de type à selle selon la revendication 6, **caractérisé en ce que** ladite section orientée vers l'arrière (37a) du carter latéral (37) est disposée à l'extérieur du cadre (4) par rapport à la direction de la largeur du véhicule.

8. Véhicule de type à selle selon la revendication 6 ou la revendication 7, **caractérisé en ce que** ladite section orientée vers l'arrière (37a) dudit carter latéral (37) comporte une ouverture vers l'arrière (37b) en tant qu'ouverture vers sa partie intérieure, ladite ouverture vers l'arrière (37b) s'ouvrant dans la direction vers le bas du véhicule, et la section orientée vers le haut (33c) de la conduite d'admission d'air (33) comporte l'ouverture vers le haut (33d) raccordée à ladite ouverture vers l'arrière (37b) du carter latéral (37).

9. Véhicule de type à selle selon la revendication 8, **caractérisé en ce que** la taille en coupe transversale de l'ouverture vers le haut (33d) de la conduite d'admission d'air (33) est supérieure à la taille transversale de l'ouverture vers le bas (33b) de la conduite d'admission d'air (33).

10. Véhicule de type à selle selon la revendication 8 ou la revendication 9, **caractérisé par** un joint (38) entre ladite ouverture vers le haut (33d) de la conduite d'admission d'air (33) et ladite ouverture vers l'arrière (37b) du carter latéral (37).

11. Véhicule de type à selle selon au moins l'une des revendications 1 à 10, **caractérisé en ce que** ledit carter latéral (37) est fixé au cadre (4) et **en ce que** ladite conduite d'admission d'air (33) est munie d'une section de soufflet (33e).

12. Véhicule de type à selle selon au moins l'une des revendications 1 à 11, **caractérisé en ce que** ledit cadre (4) comprend une section de cadre au moins sur ledit premier côté s'étendant depuis le repose pied principal (30) dans une direction orientée vers l'arrière et vers le haut, ledit repose pied auxiliaire (31) étant fixé à ladite section de cadre, et ladite section arrière du carter latéral (37) recouvrant au moins une partie de ladite section de cadre.
